# FASCICULE DE BREVET EUROPEEN

(11) **EP 0 817 820 B1**
(45) Date de publication et mention de la délivrance du brevet: **02.08.2000**
(21) Numéro de dépôt: 96908931.7
(22) Date de dépôt: 26.03.1996
(51) Int. Cl.: C09K 11/07

(54) **SOLUTION CHIMILUMINESCENTE AMELIOREE**
VERBESSERTE CHEMILUMINESZENTE LÖSUNG
IMPROVED CHEMILUMINESCENT SOLUTION

(30) Priorité: 31.03.1995 BE 9500289
(43) Date de publication de la demande: 14.01.1998
(73) Titulaire: Chemical Light Technologies Inc., Johnston, RI 02919 (US); Omniglow S.A, 95100 Argenteuil (FR)
(72) Inventeur: LADYJENSKY, Jacques, B-1000 Bruxelles (BE)
(74) Mandataire: Colens, Alain
(86) Numéro de dépôt international: BE9600034
(87) Numéro de publication internationale: WO9630461

(56) Documents cités:
- EP-A- 0 175 889

## Description

La présente invention concerne un perfectionnement particulier aux solutions et méthodes utilisées pour obtenir de la lumière au départ des phénomènes bien connus relatifs à la chimiluminescence basée sur l'emploi de peroxyoxalate.

La chimiluminescence basée sur la réaction d'un peroxyoxalate avec de l'eau oxygénée et un colorant fluorescent constitue une technique classique qui a été abondamment développée. Généralement l'oxalate est du trichloropentoxyphényl oxalate dans un solvant organique, un catalyseur étant prévu dans la solution d'eau oxygénée qui sera mélangée au système oxalate-colorant lorsque la réaction de chimiluminescence doit démarrer.

Les colorants fluorescents qui ont été le plus souvent employés jusqu'ici sont le phényléthynylantracène (et ses dérivés chlorés) qui produisent une chimiluminescence verte ou jaune-verte, le diphénylantracène et ses dérivés chlorés, qui fournissent une chimiluminescence bleue ou indigo, et certains dérivés du pérylène qui mènent à une chimiluminescence rouge ou rose.

L'emploi du colorant rubrène (tétraphénylnaphtacène) a été mentionné dès le début des travaux qui ont conduit aux techniques susmentionnées. On a rapporté alors que le rubrène donne lieu à une chimiluminescence orangée particulièrement intense avec une émission de lumens par litre - toutes autres conditions égales - de l'ordre du double de celle obtenue avec le colorant fluorescent 1-chloro phényléthynylanthracène qui est lui-même le plus performant de ceux cités ci-dessus.

Malheureusement, le colorant rubrène manque de stabilité et une dégradation rapide est observée en présence de l'eau oxygénée, qui est obligatoirement ajoutée pour amorcer la réaction de chimiluminescence.

Dans les conditions classiques, après 30 à 40 minutes tout au plus, la couleur de la lumière émise passe de l'orange au jaune, puis au jaune pâle, puis à l'incolore. Ces transitions sont chaque fois accompagnées d'une forte baisse d'émission lumineuse et d'une extinction irréversible.

Les autres colorants fluorescents mentionnés ci-dessus qui sont employés généralement dans l'art antérieur, restent stables pendant de nombreuses heures et en général au-delà de la limite de consommation du composant peroxyoxalate lui-même.

Dans l'art antérieur, le manque de stabilité du rubrène a été maintes fois mentionné et déploré, d'autant plus que le rubrène constitue de loin le colorant fluorescent le plus lumineux de tous ceux connus en chimiluminescence. A la connaissance du demandeur, aucun produit contenant du rubrène ne se trouve dans le commerce, sauf peut-être pour des applications de moindre intérêt pour lesquelles une lumière d'une durée de quelques minutes peut suffire.

Le document EP-A-0 175 889 décrit une composition aqueuse apte à fournir une réaction chimiluminescente comprenant des oxalates, un fluoresceur, p.e. le rubrène, et un polymère soluble dans l'eau, par exemple des polyoxyalkylènes. Cependant, les oxalates utilisés doivent être rendus solubles dans la solution et les solvants aqueux ne sont pas utilisés commercialement.

Par ailleurs le brevet des Etats-Unis n° 3 994 820 mentionne et revendique le fait que l'addition d'un polymère, par exemple un polyoxyéthylène, peut de manière générale augmenter la capacité lumineuse d'un colorant fluorescent (nombre de lumens.heure par litre). Les colorants mentionnés sont plus particulièrement le bis phényléthynyl anthracène (le seul pour lequel des résultats expérimentaux sont fournis), le pérylène et le rubrène. Les exemples illustrent cette augmentation de capacité par l'observation d'une augmentation d'intensité lumineuse.

Il n'y est pas indiqué ou suggéré que le rubrène présente un comportement favorable et surprenant par rapport aux désavantages maintes fois relevés dans l'art antérieur quant à sa stabilité lors de la réaction de chimiluminescence.

Il est important de noter qu'il n'est pas fait état dans ces publications, ni dans le texte du brevet américain susmentionné, d'une action de l'additif sur la stabilisation du colorant - ou si l'on veut, sur la non-disparition du colorant - pendant la durée de la réaction, mais seulement d'une amélioration de la capacité d'émission de la lumière.

Or l'inconvénient majeur des solutions au rubrène est, comme mentionné ci-dessus, le fait que ce colorant se détruit dès la première demi-heure de "réaction. Pour des solutions au rubrène, une amélioration de la capacité d'émission n'a donc plus de sens après cette première demi-heure, soit pour la plupart des utilisations commerciales. Les exemples présentés dans ce brevet n'ont concerné que des colorants autres que le rubrène. A notre connaissance personne n'a jusqu'ici, malgré plus l'écoulement d'une période de 20 ans, employé ce genre d'additif pour permettre l'utilisation commerciale de solutions au rubrène, solutions pouvant être actives pendant plusieurs heures.

Il a maintenant été constaté de manière surprenante que la stabilité du rubrène est fortement améliorée par la présence de polymères du type polyoxyalkylène, ou polymères équivalents, de préférence au moins partiellement en solution, ce qui permet leur utilisation dans des dispositifs commerciaux.

Contrairement à ce qui est suggéré dans l'art antérieur discuté ci-dessus, dans le cas particulier du rubrène la luminosité initiale n'est donc pas essentiellement supérieure à celle observée avec le colorant sans polymère, mais par contre ladite luminosité , selon l'invention, se maintient pendant une durée bien plus longue, comparable à celle observée avec les colorants classiques. On passe ainsi d'une durée d'émission de quelques dizaines de minutes à plusieurs heures, la couleur orangée étant maintenue.

Avec le rubrène, la réaction peut se poursuivre jusqu'à la consommation complète de l'oxalate. Le polymère selon l'invention exerce donc essentiellement un effet de protection contre la dégradation du rubrène par l'eau oxygénée alors que cet effet n'est pas nécessaire pour les autres agents fluoresceurs.

De préférence le poids moléculaire du polymère polyoxyéthylène (ou polyéthylène glycols) sera compris entre 1.000 et 1.000.000, plus préférentiellement de 50.000 et 300.000. Le polymère est avantageusement présent en quantité équivalente à 0,05 à 5 % en poids, plus particulièrement de 0,1 à 1%.

Un polymère particulièrement adapté est le polyoxyéthylène d'un poids moléculaire moyen d'environ 200.000.

L'invention vise à fournir des moyens pour valoriser la chimiluminescence stable ainsi obtenue, avec lesdites solutions au rubrène en lui conférant une couleur dont l'émission se situe dans le rouge-orange, au lieu de l'orangé. Il est notoire en effet que la demande du marché en chimiluminescence rouge n'est pas suffisamment rencontrée.

Plus particulièrement l'invention propose une solution destinée à produire, après mélange à une autre solution connue en soi, une réaction chimiluminescente, ladite solution comprenant un solvant, un oxalate, le rubrène et un polymère soluble caractérisée en ce qu'elle comprend également 2 à 40% en poids d'une suspension d'une poudre de polymère peu ou pas soluble auquel est incorporé un second colorant fluoresceur rouge.

L'invention propose également un récipient destiné à émettre de la lumière chimiluminescente caractérisé en ce qu'il comprend au moins deux solutions isolées dans des compartiments, susceptibles de se mélanger à l'initiative de l'utilisateur, un compartiment au moins comprenant une solution susmentionnée et un compartiment au moins comprenant une solution d'eau oxygénée et un catalyseur.

Il n'existe commercialement qu'une seule formule rouge satisfaisante, à savoir celle à base de pérylène substitué faisant l'objet du brevet européen 0 403 809 (priorité belge du 20 juin 1989) qui donne une chimiluminescence rouge pur (rouge signal), mais dont le prix est élevé.

Une autre approche a été utilisée pour l'obtention d'une lumière s'approchant du rouge et est décrite dans le brevet des Etats-Unis 4.379.320. Selon ce document, les parois d'un récipient sont teintées au moyen d'un colorant fluorescent rouge, et le récipient est rempli d'une solution chimiluminescente non-rouge, émettant dans une longueur d'onde inférieure.

Un inconvénient majeur de cette méthode est qu'elle oblige l'industriel utilisateur à acheter ou fabriquer des récipients moulés exprès pour devenir des articles à lumière rouge, en plus de son stock habituel de récipients standard à parois claires destinés aux autres couleurs. Un autre inconvénient consiste en l'impossibilité de réaliser de manière simple des articles, comme des colliers lumineux tricolores par exemple, pour lesquelles derrière une paroi unique claire en matière plastique, sont situées des ampoules successives adaptées chacune pour une couleur différente de chimiluminescence.

A défaut de rouge pur, le marché appréciera donc une solution orangée telle que la présente invention la propose ci-dessus, mais il appréciera encore bien davantage une solution émettant dans le rouge-orange selon un mode de réalisation particulière de l'invention.

Dans ce but, toujours selon l'invention, à la solution chimiluminescente au rubrène et polymère soluble telle que décrite ci-dessus, est ajoutée en suspension une quantité comprise entre 2 et 40 % en poids d'un polymère en poudre comprenant des colorants capables de fournir une fluorescence rouge, lequel colorant forme une solution solide avec ledit polymère en poudre.

De telles solutions solides en poudre sont connues dans le commerce : elles émettent une fluorescence rouge sous l'action de la lumière du jour ou tout autre éclairage commun. Les colorants qui s'y trouvent n'ont nullement la propriété d'émettre une fluorescence utilisable telle quelle dans les réactions chimiluminescentes aux peroxyoxalates , sinon on les aurait employés depuis longtemps dans ce but. Leur utilisation commerciale en solution solide dans des polymères broyés pour émettre dans le rouge sous l'action de la lumière ambiante s'est faite toujours jusqu'ici par leurs incorporation dans des vernis, peintures, encres, matières plastiques à mouler ou autre mediums de ce genre.

Selon la présente invention, ces solutions solides en poudre ne sont pas utilisées comme d'habitude. Elles ne reçoivent pas d'éclairage. En suspension dans le liquide substrat de chimiluminescence, elles ne reçoivent ici que l'émission chimiluminescente orangée qui les entoure, en provenance du rubrène, et on constate qu'elles réémettent dans le rouge avec une intensité telle que la teinte résultante aux yeux de l'observateur est un rouge-orange très intense, et non plus un orangé, comme avec le rubrène tout seul.

Il y a lieu de préciser qu'il semble ne pas s'agir ici de l'action d'un filtre rouge, ou masque rouge, ne laissant passer, de la couleur orangée, que la composante rouge en bloquant le jaune. S'il en était ainsi, l'intensité de la couleur filtrée serait sensiblement atténuée par rapport à la couleur orangée de base. Ce n'est pas le cas : l'intensité rouge-orange perçue est forte et du même ordre de grandeur que l'intensité orangée perçue avec le seul colorant rubrène. Il y a donc une synergie très prononcée.

Les poudres utilisables selon l'invention sont variées mais les polymères concernés seront le plus souvent des résines de type urée-formaldéhyde, mélamine-formaldéhyde, sulfonamide, glycérophtalate, vinylique, acrylique, acrylonitrile ou polyester.

Les colorants fluorescents rouges (généralement présents à des concentrations p.e. de 1 à 6% en poids) dissous dans ces résines sont avantageusement choisis parmi les xanthènes, coumarines et naphtalimides. Ces poudres sont dans le commerce et produites en Europe, au Canada, aux Etats-Unis et au Japon. Ces poudres ont généralement une granulométrie comprise entre 1 et 25 micromètres. Leur solubilité dans les solvants généralement employés comme supports de réaction chimiluminescente tels que le dibutyl phtalate, le diméthyl phtalate, ou le benzoate de butyle, est faible p.e. moins de 4 grammes par litre.
Pour l'invention on emploie donc une suspension, en veillant à utiliser ces poudres en granulométrie suffisamment fine pour éviter des sédimentations du produit élaboré.

Parmi les poudres de solutions solides polymériques fluorescentes rouges disponibles, on peut notamment citer les produits (marques) suivants qui - quoique à des degrés inégaux- peuvent être pris en considération pour leur utilisation dans la présente invention :
Radglo K, R, P, JST
Holcolor HC
Deifel Leuchtrot
Radiant-Magruder TI,P,JS,R,K,MP
U.Min & Chem. Co FG, FB, NP, FC, FH, FAE
Epocolor FP,MA
Sinloihi F, FZ, FA, FR, FM, SB
Dayglo K,R,P, JST

Les exemples comparatifs suivants illustrent la présente invention, sans la limiter d'une quelconque manière.

### Exemple 1

A 850 ml de dibutyl phtalate chauffé à 140 °C et purgé à l'azote on ajoute 108 g de bis(2,4,5 trichloro-6-carbopentoxy phényl)oxalate et 3,8 g de rubrène, en mélangeant jusqu'à dissolution. On laisse refroidir ce mélange jusqu'à 85°C, température à laquelle on ajoute 150 ml de hexanoate de butyle comme co-solvant.

On prépare par ailleurs un mélange de 80 parties en volume de diméthylphtalate et 20 parties de t-butanol, dans lequel on dissout 25 g de peroxyde d'hydrogène et 60 mg de salicylate de potassium; cette solution constituant l'activateur.

Pour initier la chimiluminescence, on mélange à température ambiante, 1 partie en volume d'activateur à 3 parties de solution colorée dans un récipient en verre boro-silicate courant, de préférence un gobelet de 50 ml environ.
On observe une forte émission initiale de lumière de couleur orange qui, après une dizaine de minutes, commence à virer vers le jaune, puis entre 15 et 20 minutes, à pâlir fortement, tout en continuant à virer vers un jaune clair de plus en plus pâle et de moins en moins lumineux. Après une 30 à 40 minutes, on est pratiquement arrivé à extinction.

### Exemple 2

A 850 ml de dibutyl phtalate chauffé à 140 °C et purgé à l'azote on ajoute 108 g de bis(2,4,5 trichloro-6-carbopentoxy phényl)oxalate et 3,8 g de rubrène, en mélangeant jusqu'à dissolution. On laisse refroidir ce mélange jusqu'à 85 °C, température à laquelle on ajoute 4 g de polyoxyéthylène de poids moléculaire de 200.000 ainsi que 150 ml de benzoate de butyle, comme co-solvant. On maintient la température tout en continuant à mélanger jusqu'à dissolution.

Comme dans l'exemple 1, on prépare par ailleurs une solution d'activateur de composition identique et on initie la réaction de chimiluminescence en mélangeant les deux solutions dans la même proportion de 1 à 3.

On observe une forte émission initiale de lumière d'intensité sensiblement équivalente à celle émise dans l'exemple 1. Après une dizaine de minutes, l'observation - faite de préférence par comparaison et dans le voisinage immédiat de l'échantillon selon l'exemple 1 - montre que la couleur a conservé sa teinte orange sans avoir varié. Après 15 à 20 minutes, l'intensité lumineuse a certes décru, mais se révèle très fortement supérieure à celle de l'échantillon selon l'exemple 1. La couleur orange est conservée. Les observations effectuées après 1 heure, 2 heures etc. et ainsi de suite toutes les heures jusqu'à 15 heures, permettent de conclure que la lumière conserve sa couleur orange et que son intensité décroit lentement et régulièrement jusqu'à s'annuler vers la quinzième heure, alors que dans l'exemple 1 cette décroissance régulière conduisait à l'extinction après une bonne demi-heure.

### Exemple 3

A 850 ml de dibutyl phtalate chauffé à 140 °C et purgé à l'azote on ajoute 108 g de bis(2,4,5 trichloro-6-carbopentoxy phényl)oxalate et 3,8 g de rubrène, en mélangeant jusqu'à dissolution. On laisse refroidir ce mélange jusqu'à 85 °C, température à laquelle on ajoute 4 g de polyoxyéthylène de poids moléculaire de 200.000 ainsi que 150 ml de benzoate de butyle, comme co-solvant et 8 g du produit "Radglo K-15" de la firme Radiant-Color N.V. (Houthalen, Belgique). Ce dernier produit est une solution solide de colorants xanthènes et coumarines dans une matrice en poudre de résine de polyester.

Comme dans l'exemple 1, on prépare par ailleurs une solution d'activateur de composition identique et on initie la réaction de chimiluminescence en mélangeant les deux solutions dans la même proportion de 1 à 3, et à nouveau on fait des observations comparatives, en ayant pris soin, ici encore, de travailler dans des récipients transparents identiques.

On observe ici une forte émission initiale de lumière d'intensité sensiblement équivalente à celle émise dans les exemples 1 et 2.

Cependant la couleur observée au lieu d'être de teinte orange est de teinte "rouge-orange". Certains observateurs adultes la qualifient de "rouge clair", "rouge vermillon" ou "rouge feu" ; d'autres disent simplement "rouge orange". Plusieurs enfants n'ayant pas encore appris toutes le nuances la qualifie franchement de "rouge".

La différence de teinte par rapport à celle des exemples 1 et 2 est à tout cas certaine dans le sens d'un décalage vers le rouge.

L'évolution de l'intensité lumineuse dans le temps, entre 0 et 15 h de durée à partir de l'allumage, est assez similaire à celle de l'exemple 2 - avec éventuellement une intensité lumineuse légèrement plus faible - mais quasi équivalente pour un observateur moyen. Cette teinte est conservée jusqu'à l'extinction.

## Revendications

1. Solution destinée à produire, après mélange à une autre solution connue en soi, une réaction chimiluminescente, ladite solution comprenant un solvant, un oxalate, le rubrène et un polymère soluble caractérisée en ce qu'elle comprend également 2 à 40% en poids d'une suspension d'une poudre de polymère peu ou pas soluble auquel est incorporé un second colorant fluoresceur rouge.

2. Solution selon la revendication 1 caractérisée en ce que le polymère soluble est un polyoxyalkylène.

3. Solution selon la revendication 1 ou 2 caractérisée en ce que le polymère soluble est du polyoxyéthylène.

4. Solution suivant l'une quelconque des revendications précédentes caractérisée en ce que le poids moléculaire du polymère soluble varie de 20.000 à 400.000.

5. Solution suivant l'une quelconque des revendications précédentes caractérisée ne ce que le poids moléculaire du polymère soluble est supérieure à 50.000.

6. Récipient destiné à émettre de la lumière chimiluminescente caractérisé en ce qu'il comprend au moins deux solutions isolées dans des compartiments, susceptibles de se mélanger à l'initiative de l'utilisateur, un compartiment au moins comprenant une solution selon les revendications 1 à 5 et un compartiment au moins comprenant une solution d'eau oxygénée et un catalyseur.

7. Solution chimiluminescente comprenant un solvant organique , un bis oxalate, du rubrène et du peroxyde d'hydrogène et éventuellement un catalyseur caractérisé en ce qu'elle comprend également un polymère soluble et une poudre en suspension de polymère insoluble dans lequel est incorporé un fluoresceur rouge.

8. Solution selon n'importe laquelle des revendications précédentes dans laquelle le fluoresceur rouge est choisi parmi les xanthènes, coumarines et naphtalimides.

9. Solution selon n'importe laquelle des revendications précédentes dans laquelle la poudre de polymère est à base de résines de type urée-formaldéhyde, mélamine-formaldéhyde, sulfonamide, glycérophtalate, vinylique, acrylique, acrylonitrile ou polyester.

10. Solution selon n'importe laquelle des revendications précédentes dans laquelle la poudre de polymère a une granulométrie comprise entre 1 et 25 micromètres.

## Patentansprüche

1. Lösung zur Erzeugung einer chemilumineszenten Reaktion nach dem Zumischen zu einer anderen an sich bekannten Lösung, wobei besagte Lösung ein Lösungsmittel, ein Oxalat, Rubren und ein lösliches Polymerisat enthält, **dadurch gekennzeichnet**, daß sie auch 2 bis 40 Gew.% einer Suspension eines wenig oder nicht löslichen Polymerisatpulvers enthält, in das ein zweiter, roter Fluoreszenzfarbstoff eingebracht ist.

2. Lösung gemäß Anspruch 1, **dadurch gekennzeichnet**, daß das lösliche Polymerisat ein Polyoxyalkylen ist.

3. Lösung gemäß Anspruch 1 oder 2, **dadurch gekennzeichnet**, daß das lösliche Polymerisat ein Polyoxyethylen ist.

4. Lösung gemäß einem der vorstehenden Ansprüche, **dadurch gekennzeichnet**, daß das Molekulargewicht des löslichen Polymerisats von 20.000 bis 400.000 schwankt.

5. Lösung gemäß einem der vorstehenden Ansprüche, **dadurch gekennzeichnet**, daß das Molekulargewicht des löslichen Polymerisats größer als 50.000 ist.

6. Behälter zur Emittierung von chemilumineszentem Licht, **dadurch gekennzeichnet**, daß es mindestens zwei voneinander getrennte Lösungen in Kompartimententen enthält, die auf Initiative des Anwenders miteinander vermischt werden können, wobei ein Kompartiment mindestens eine Lösung gemäß den Ansprüchen 1 bis 5 und ein Kompartiment mindestens eine Lösung von Wasserstoffperoxid und einen Katalysator enthält.

7. Chemilumineszente Lösung, die ein organisches Lösungsmittel, ein Bisoxalat, Rubren, Wasserstoffperoxid und eventuell einen Katalysator enthält, **dadurch gekennzeichnet**, daß sie auch ein lösliches Polymerisat und ein suspendiertes Pulver eines unlöslichen Polymerisats enthält, in das ein roter Fluoreszenzfarbstoff eingebracht ist.

8. Lösung gemäß einem der vorstehenden Ansprüche, in der der rote Fluoreszenzfarbstoff ausgewählt ist aus Xanthenen, Cumarinen und Naphthalimiden.

9. Lösung gemäß einem der vorstehenden Ansprüche, in der das Polymerisat-Pulver auf Harzen vom Typ Harnstoff-Formaldehyd, Melamin-Formaldehyd, Sulfonamid, Glyzerophthalat, Vinyl-, Acryl-Acrylnitril- oder Polyesterharz basiert.

10. Lösung gemäß einem der vorstehenden Ansprüche, in der das Polymerisat-Pulver eine Korngröße zwischen 1 und 25 Mikrometer aufweist.

## Claims

1. A solution for producing, after mixing with another solution known per se, a chemiluminescent reaction, said solution containing a solvent, an oxalate, rubrene and a soluble polymer characterised in that the solution contains also 2 to 40 % by weight of a suspension of a powder polymer which is weakly or not at all soluble and in which a second red fluorescer has been incorporated.

2. Solution according to claim 1 characterised in that the soluble polymer is a soluble polyoxyalkylene.

3. Solution according to claim 1 or 2 characterised in that the soluble polymer is polyoxyethylene.

4. Solution according to any of the preceding claims characterized in that the molecular weight of the soluble polymer varies from 20,000 to 400,000.

5. Solution according to claim 1 characterized in that the molecular weight of the soluble polymer is above 50,000.

6. Container for producing chemiluminescent light characterised in that it comprises at least two separated solutions located in compartments, able to be mixed if desired by the user, one compartment at least comprising a solution according to any of the claims 1 to 5 at least one compartment comprising a hydrogen peroxyde solution with a catalyst.

7. Chemiluminescent solution comprising an organic solvent, a bis oxalate, rubrene and hydrogen peroxide and possibly a catalyst characterised in that it comprises also a soluble polymer and , in suspension, a powder of insoluble polymer wherein a red fluorescer is incorporated.

8. Solution according to claim 1 wherein the red fluorescer is chosen in the group consisting of xanthenes, coumarines and naphtalimides.

9. Solution according to claim 1 wherein the polymer powder is based on a resin of the urea-formaldehyde, melamine-formaldehyde, sulfonamide, glycerophthalate, vinylic, acrylic, acrylonitrile or polyester type.

10. Solution according to claim 1 wherein the polymer powder is of a granulometry varying between 1 and 25 micrometers.
